# EUROPÄISCHE PATENTSCHRIFT

(11) **EP 1 406 023 B1**
(45) Veröffentlichungstag und Bekanntmachung des Hinweises auf die Patenterteilung: **15.08.2007**
(21) Anmeldenummer: 03020221.2
(22) Anmeldetag: 06.09.2003
(51) Int. Cl.: F16C 1/22

(54) **Einstellvorrichtung für einen Bowdenzug, insbesondere für eine Drosselklappenstellung**
Bowden cable adjusting device especially for a throttle position control
Dispositif de rattrapage de jeu pour câble Bowden, notamment pour une commande des gaz par soupape à papillon

(30) Priorität: 04.10.2002 DE 10246502
(43) Veröffentlichungstag der Anmeldung: 07.04.2004
(73) Patentinhaber: Dr.Ing. h.c. F. Porsche Aktiengesellschaft, 70435 Stuttgart (DE)
(72) Erfinder: Mayer, Siegfried, 71229 Leonberg (DE); Geffert, Thomas, 74357 Bönnigheim (DE)

(56) Entgegenhaltungen:
- EP-A- 0 511 088

## Beschreibung

Die Erfindung geht aus von einen Adapterelement für einen Bowdenzug eines Kraftfahrzeuges, insbesondere zur Begrenzung der Drosselklappenstellung gemäß den Merkmalen des Oberbegriffs des Anspruchs 1.

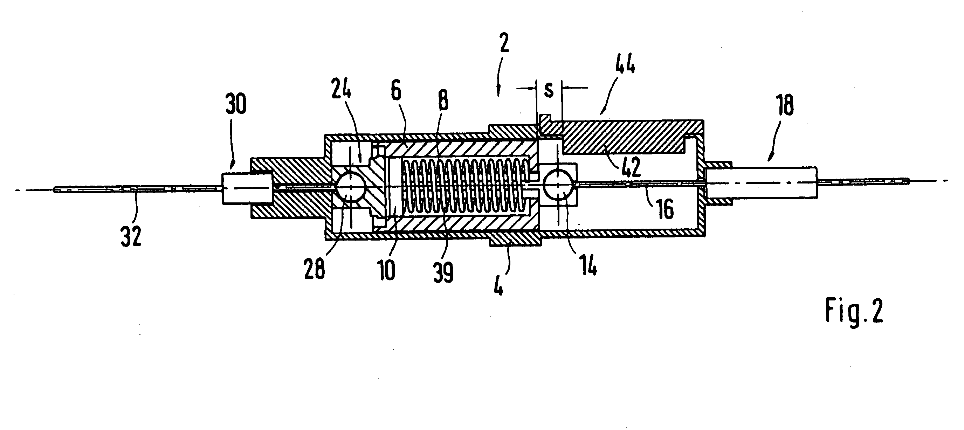

Aus der DE 692 13 078 T2 ist eine Vorrichtung zur automatischen Längenverstellung eines Bowdenzuges bekannt, bei der ein im Bowdenzug integriertes Adapterelement dafür sorgt, dass nach Erreichen der Endstellung der Drosselklappe eine weitere Verstellbewegung des Gaspedals ohne Beeinflussung der Drosselklappenstellung möglich ist. Damit können, wie in der Druckschrift angegeben, beispielsweise Überspannungen nach Erreichen der Drosselklappenendstellung abgebaut werden. Bei den in der DE 692 13 078 T2 dargestellten Ausführungsformen des Adapterelementes findet im ersten Ausführungsbeispiel (siehe Fig. 2) eine nach außen hin offene Relativbewegung zwischen dem Zylinder - und Kolbenteil des Adapterelementes statt, während im zweiten Ausführungsbeispiel (siehe Fig. 3) zumindest noch der sich am Kolbenteil abstützende Bowdenzug eine Relativbewegung innerhalb einer Öffnung des Zylinders der Adapterhülse ausführt. Verunreinigungen o. ä. können dazu führen, dass diese Relativbewegung beeinträchtigt ist, so dass ein zuverlässiges Funktionieren der Bowdenzugverstellung nicht mehr sicher gewährleistet ist.

Es ist daher Aufgabe der Erfindung, eine Vorrichtung zur Begrenzung der Drosselklappenstellung einer Brennkraftmaschine zu entwickeln, bei dem die Verstellbewegung nach Erreichen eines Anschlags ausschließlich innerhalb des im Bowdenzugs integrierten Adapterelementes erfolgt.

Die Aufgabe wird erfindungsgemäß durch die im Anspruch 1 angegebenen Merkmale gelöst.

Durch die im Anspruch 1 angegeben Merkmale wird erreicht, dass die nach dem Erreichen des Anschlags für die Drosselklappenstellung zusätzliche Verstellbewegung des Bowdenzuges ausschließlich über die im Adapterelement vorgesehenen Bauteile erfolgt. Damit ist auch über einen längeren Zeitraum ein zuverlässiger und verschleißarmer Bowdenzug- Leerhub innerhalb des Adapterelementes möglich.

In den Unteransprüchen sind weitere vorteilhafte Ausgestaltungen und Verbesserungen der erfindungsgemäßen Vorrichtung insbesondere zur Begrenzung der Drosselklappenstellung einer Brennkraftmaschine enthalten.

Dadurch, dass der für die Schiebehülse vorgeschlagene Anschlag durch eine im Gehäuse des Adapterelementes vorgesehene Öffnung einsteckbar ist, können je nach Anwendungs- und Einsatzfall unterschiedlichen Bowdenzugverlängerungen vorgesehen werden.

Ein Ausführungsbeispiel der Erfindung ist in der Zeichnung dargestellt und wird nachfolgend näher erläutert.

Es zeigen:

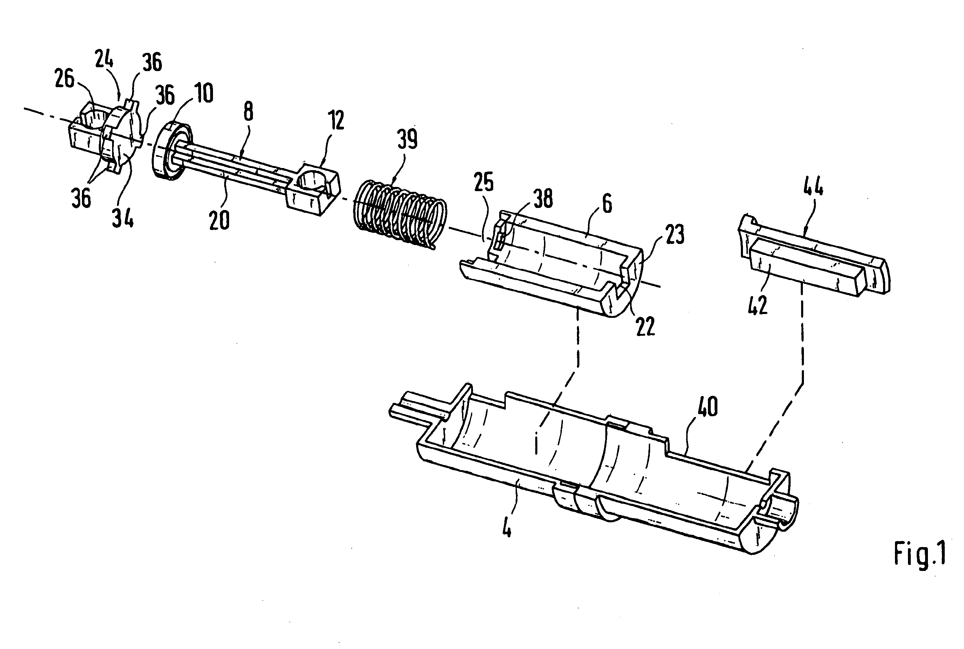

- Fig. 1: eine Explosionsdarstellung eines im Bowdenzug integrierbaren Adapterelementes und
- Fig. 2: einen Längsschnitt durch das Adapterelement.

### Beschreibung des Ausführungsbeispiels

Das Adapterelement 2 weist ein zylinderförmiges Gehäuseteil 4 auf, in dem eine Schiebehülse 6 längsverschieblich gelagert ist. Zur besseren Darstellung der im Gehäuseteil 4 angeordneten Bauteile ist nur eine Zylinderhälfte des Gehäuseteils 4 dargestellt. Die Schiebehülse 6 ist ebenfalls als ein hohlzylindrisches Bauteil ausgebildet, in dem wiederum ein Verstellelement, im folgenden als Innenstempel 8 bezeichnet, längsverschieblich geführt ist. Der Innenstempel 8 weist an seinem einen Ende einen Führungskolben 10 auf, der in der Schiebehülse 6 gleitend geführt ist. An seinem anderen Ende ist eine Aufnahme 12 für einen Nippel 14 eines Bowdenzugseiles 16 auf, der innerhalb eines Bowdenzug - Abschnittes 18 vorgesehen. Führungskolben 10 und Aufnahme 12 sind durch einen Steg 20 des Innenstempels 8 verbunden; das Aufnahmeauge 12 für das Bowdenzugseil 16 und eine auf der einen Stirnseite der Schiebehülse 6 vorgesehene Öffnung 22 sind so dimensioniert, dass sich das Aufnahmeauge 12 im eingebauten Zustand (siehe Fig. 2) an der Stirnseite der Schiebehülse 6 abstützt. Dazu wird bei der Montage des Adapterelemetes 2 das Aufnahmeauge 12 mit seiner schmalen Seite durch die Öffnung 22 hindurchgeführt und danach um 90° verdreht.

Die auf der anderen Seite der Schiebehülse 6 vorgesehene Öffnung 25, die im wesentlichen dem Innendurchmesser der Schiebehülse 6 entspricht, ist durch ein Deckelelement 24 verschlossen, das gleichzeitig ein zweites Aufnahmeauge 26 für einen zweiten Nippel 28 eines in einem zweiten Bowdenzugabschnitt 30 aufgenommenen Bowdenzugseiles 32 aufweist. Im vorliegenden Ausführungsbeispiel ist das Deckelelement 24 nach Art eines Bajonettverschlusses an der Schiebehülse 6 befestigt. Dazu weist das kreisförmig ausgebildete Verschlussteil 34 des Deckelelements 24 radial nach außen führende Stege 36 auf, die im zusammengebauten Zustand an der Stirnseite der Schiebehülse 6 ausgebildete Arretiersegmente 38 hintergreifen. Der Innenstempel 8 ist von einer in der Schiebehülse 6 angeodneten Spiralfeder 39 umgeben, die sich an ihrem einen Ende am Führungskolben 10 des Innenstempels 8 und an ihrem anderen Ende an der Gehäuseinnenwand der Schiebehülse 6 abstützt.

Am Gehäuseteil 4 ist eine rechteckförmige Öffnung 40 vorgesehen, in der ein als Anschlag für die Schiebehülse 6 ausgebildeter Zapfen 42 eines Anschlagelementes 44 eingreift. Das Anschlagelement 44 ist so ausgebildet, dass es die Öffnung 40 wasserdicht verschliesst.

Im folgenden wird die Funktionsweise des Adapterelementes 2 und deren mögliche Verwendungsmöglichkeiten näher erläutert:

Der erste Bowdenzugabschnitt 18 führt beispielsweise zum Gasdrehgriff eines Motorrades oder zum Gaspedal eines Kraftfahrzeuges, während der zweite Bowdenzugabschnitt 30 mit der Drosselklappe eines Motors verbunden ist.
Beim Betätigen des Gasdrehgriffes wird über die Bowdenzugseile 16, 32 proportional zum Verstellweg s die Drosselklappe geöffnet, dabei wird die Hülse 6 innerhalb des Gehäuseteils 4 in Richtung des Anschlagelementes 44 verschoben. Nach dem Durchlaufen des Verstellweges s, der im vorliegenden Fall (siehe Fig. 2) nicht unbedingt maßstabsgerecht dargestellt ist, schlägt die Schiebehülse 6 am Zapfen 42 des Anschlagelementes 44 an und bei einer weiteren Betätigung des Gasdrehgriffes wird entgegen der Kraft der Spiralfeder 39 der Innenstempel 8 innerhalb der Schiebehülse 6 verschoben. Bei dieser Verstellbewegung findet keine weitere Verstellung der Drosselklappe statt; der sogenannte Leerhub innerhalb der Schiebehülse 6 ist beendet, wenn die Spiralfeder auf Block geht.

Durch den Einsatz des Adapterelementes 2 ist z.B. auf einfache Art und Weise eine Leistungsdrosselung eines Motors möglich, die durch den Einsatz verschiedener Anschlagelemente für die Schiebehülse 6 auch einstellbar ist. Gleichzeitig können durch das Adapterelement 2 Überspannungen abgebaut werden, wenn die Drosselklappenendstellung erreicht ist und noch ein federbelasteter Verstellweg innerhalb des Adapterelementes möglich ist.

## Patentansprüche

1. Adapterelement für einen Bowdenzug eines Kraftfahrzeuges, insbesondere zur Begrenzung der Drosselklappenstellung, mit einem Gehäuse (4), in dem eine Schiebehülse (6) angeordnet ist, in der ein Verstellelement (8) entgegen einer Federkraft längsverschieblich aufgenommen ist, wobei das Verstellelement (8) und die Schiebehülse (6) eine Aufnahme (12, 26) zum Einhängen eines Seiles (16, 32) eines Bowdenzug - Abschnittes (18, 30) aufweisen und im bzw. am Gehäuse (4) ein Anschlagelement (44) vorgesehen ist, an dem die Schiebehülse (6) nach Durchlaufen eines Verstellweges anschlägt.

2. Vorrichtung nach Anspruch 1, **dadurch gekennzeichnet, dass** zwischen dem Verstellelement (8) und der Schiebehülse (6) ein Federelement (39) angeordnet ist, das sich an einer Stirnseite der Schiebehülse (6) und am Verstellelement (8) abstützt.

3. Vorrichtung nach Anspruch 1 oder 2, **dadurch gekennzeichnet, dass** im Gehäuse (4) des Adapterelementes (2) eine Öffnung (40) vorgesehen ist, in der das Anschlagelement (44) einsteckbar ist.

## Claims

1. An adapter for a Bowden transmission of a motor vehicle, especially for limiting the throttle-valve position, with a housing (4) in which is arranged a sliding sleeve (6) in which an adjusting member (8) is held so as to be longitudinally displaceable counter to a spring force, wherein the adjusting member (8) and the sliding sleeve (6) have a receiver (12, 26) for suspending a cable (16, 32) of a Bowden-transmission portion (18, 30), and a stop member (44) is provided in or on the housing (4) and is struck by the sliding sleeve (6) after movement of the latter along a displacement path.

2. A device according to claim 1, **characterised in that** a spring member (39) is arranged between the adjusting member (8) and the sliding sleeve (6) and is supported against one end of the sliding sleeve (6) and against the adjusting member (8).

3. A device according to claim 1 or 2, **characterised in that** an opening (40) is provided in the housing (4) of the adapter (2), into which opening (40) the stop member (44) is insertable.

## Revendications

1. Elément adaptateur pour un câble Bowden d'un véhicule automobile, en particulier pour la limitation de la position du papillon des gaz, avec un boîtier (4) dans lequel est placé un manchon coulissant (6) dans lequel est logé un élément de réglage (8) déplaçable longitudinalement contre une force de ressort, l'élément de réglage (8) et le manchon coulissant (6) comportant un logement (12, 26) pour l'accrochage du câble (16, 32) d'un segment de câble Bowden (18, 30) et un élément de butée (44), sur lequel le manchon coulissant (6) bute après avoir parcouru une course de réglage, étant prévu dans ou sur le boîtier (4).

2. Dispositif selon la revendication 1, **caractérisé en ce qu'**un élément de ressort (39), qui s'appuie sur une face frontale du manchon coulissant (6) et sur l'élément de réglage (8), est disposé entre l'élément de réglage (8) et le manchon coulissant (6).

3. Dispositif selon la revendication 1 ou 2, **caractérisé en ce qu'**il est prévu dans le boîtier (4) de l'élément adaptateur (2) une ouverture (40) dans laquelle l'élément de butée (44) peut être inséré.
